# EUROPEAN PATENT SPECIFICATION

(11) **EP 3 648 399 B1**
(45) Date of publication and mention of the grant of the patent: **06.09.2023**
(21) Application number: 17918815.6
(22) Date of filing: 26.07.2017
(51) Int. Cl.: H04L 41/12

(54) **NETWORK TOPOLOGY STRUCTURE DETERMINING METHOD, DEVICE, AND SYSTEM**
VERFAHREN, VORRICHTUNG UND SYSTEM ZUR BESTIMMUNG EINER NETZWERKTOPOLOGIESTRUKTUR
PROCÉDÉ, DISPOSITIF, ET SYSTÈME DE DÉTERMINATION D'UNE TOPOLOGIE DE RÉSEAU

(43) Date of publication of application: 06.05.2020
(73) Proprietor: Huawei Technologies Co., Ltd., Longgang District Shenzhen, Guangdong 518129 (CN)
(72) Inventor: ZHANG, Xiaolong, Shenzhen Guangdong 518129 (CN)
(74) Representative: Gill Jennings & Every LLP
(86) International application number: PCT/CN2017/094539
(87) International publication number: WO 2019/019059

(56) References cited:
- EP-A1- 2 571 237
- CN-A- 101 572 569
- CN-A- 102 201 969
- CN-A- 104 396 189
- US-A1- 2011 058 502
- US-A1- 2014 372 634
- Docsis: "Best Practices and Guidelines Proactive Network Maintenance Using Pre-equalization", , 23 June 2011 (2011-06-23), XP55370468, Retrieved from the Internet: URL:https://community.cablelabs.com/wiki/p lugins/servlet/cablelabs/alfresco/download ?id=fe685976-3dd1-44c6-91c3-a16d7031d79f;1 .0 [retrieved on 2017-05-09]

## Description

### TECHNICAL FIELD

This application relates to the field of information processing technologies, and in particular, to a network topology determining method, apparatus, and system.

### BACKGROUND

In a co-frequency full duplex (FDX) technology, signals in two directions are transmitted on a same physical channel, to be specific, by eliminating interference from a signal transmitted by a receiver of a duplex communications node, the receiver of the duplex communications node receives, at the same time when transmitting the signal, a signal at a same frequency from another node. Compared with conventional time division duplex (TDD) and frequency division duplex (FDD), the FDX technology can double spectrum efficiency.

Currently, to increase uplink bandwidth of a system, a cable network uses an FDX mode. However, because uplink and downlink signals are transmitted at a same frequency in an FDX system network, the system is relatively complex, and external interference (noise, non-linear, and the like) has relatively great impact on system performance. In this case, when a fault occurs in the network, fault locating is relatively complex. To resolve these problems, a topology of the FDX system network is usually required, so as to perform network monitoring and fault locating.

Therefore, how to obtain a connection relationship between network elements in an FDX network and obtain a topology of the FDX network is an urgent technical problem that needs to be resolved at present.

US 2011/0058502 relates to method and system for managing line topology. EP 2571237 relates to method for initiating a safeguard mode for an XDSL transmission system and residential gateway using the method.

### SUMMARY

Embodiments of this application provide a network topology determining method, apparatus, and system, to simply and quickly determine a topology of a network.

The invention has been defined in the independent claims. Further specific technical features have been defined in the dependent claims.

In the solution, a network device may obtain a frequency domain characteristic of the echo channel of the CMTS by using an echo cancellation (EC) module of the CMTS, and then may convert the frequency domain characteristic of the echo channel of the CMTS to the first time domain characteristic of the echo channel of the CMTS through fast Fourier transform (FFT), where the first time domain characteristic may be, for example, an impulse response or TDR. Certainly, the network device may alternatively obtain the first time domain characteristic of the echo channel of the CMTS directly.

In addition, the network device may obtain a frequency domain characteristic of the echo channel of the CM by using an EC module of the CM, and then may convert the frequency domain characteristic of the echo channel of the CM to a second time domain characteristic of the echo channel of the CM through FFT, where the second time domain characteristic may be, for example, an impulse response or TDR. Certainly, the network device may alternatively obtain the second time domain characteristic of the echo channel of the CM directly.

In this solution, the network device determines the length of the trunk cable based on the first time domain characteristic of the echo channel of the CMTS, determines, based on the second time domain characteristic of the echo channel of each CM, the length of the drop cable connected to the trunk cable, then determines the correspondence between the at least two CMs and the at least two splitters/taps based on the SINR between the any two of the CMs, and finally, determines the topology of the network based on the length of the trunk cable, the length of the drop cable, and the correspondence between the at least two CMs and the at least two splitters/taps. In this way, the topology of the network is simply and efficiently determined.

The network device may determine a quantity of splitters/taps based on a quantity of peaks in the first time domain characteristic. The trunk cable is a cable used to connect the CMTS and each splitter/tap. The network includes at least two splitters/taps and the determined length of the trunk cable includes a length of a trunk cable between the port of the CMTS and a port of a first splitter/tap and a length of a trunk cable between the port of the CMTS and a port of each of other second splitters/taps.

After the second time domain characteristic of the echo channel of the CM is obtained, optionally, the network device may determine the length of the drop cable based on a time difference between two peaks in the second time domain characteristic. The length of the drop cable includes a length of a cable between each CM and the trunk cable.

After the at least one SINR characteristic information group is sorted in descending order of quantities of pieces of characteristic information, a same CM corresponding to characteristic information in an SINR characteristic information group that includes a largest quantity of pieces of characteristic information is determined as a first order CM connected to the trunk cable, to be specific, the CM is connected to a first order splitter/tap; and a same CM corresponding to characteristic information in an SINR characteristic information group that includes a second largest quantity of pieces of characteristic information is determined as a second order CM connected to the trunk cable, to be specific, the CM is connected to a second order splitter/tap. By analogy, the correspondence between the at least two CMs and the at least two splitters/taps may be determined, to be specific, a correspondence between each CM and a splitter/tap is determined.

The length of the trunk cable and the length of the drop cable may be determined based on the time differences between the two peaks in the time domain characteristics, so that a cable length is simply determined.

Echo severity may be obtained by analyzing the strength value of the first time domain characteristic and/or the strength value of the second time domain characteristic. For example, a threshold or a threshold line may be set, and when the strength value of the first time domain characteristic and/or the strength value of the second time domain characteristic exceed/exceeds the second preset value, it indicates that an echo is very severe, and a location of a severe echo point may be learned through delay analysis. In this case, prompt information is sent to a user, so as to give a network quality monitoring alarm, so that network monitoring and locating may be performed. This plays a key role in fault locating and network operation and maintenance.

According to the network topology determining method, apparatus, and system provided in this application, the length of the trunk cable is determined based on the first time domain characteristic of the echo channel of the CMTS, the length of the drop cable connected to the trunk cable is determined based on the second time domain characteristic of the echo channel of each CM, then the correspondence between the at least two CMs and the at least two splitters/taps is determined based on the SINR between the any two of the CMs, and finally, the topology of the network is determined based on the length of the trunk cable, the length of the drop cable, and the correspondence between the at least two CMs and the at least two splitters/taps. In this way, the topology of the network is simply determined.

### BRIEF DESCRIPTION OF DRAWINGS

FIG. 1 is a schematic flowchart of Embodiment 1 of a network topology determining method according to this application;
FIG. 2 is a schematic diagram of a first time domain characteristic;
FIG. 3 is a schematic diagram of connection of splitters/taps;
FIG. 4a is a schematic diagram of a second time domain characteristic;
FIG. 4b is another schematic diagram of a second time domain characteristic;
FIG. 4c is a still another schematic diagram of a second time domain characteristic;
FIG. 5 is a schematic flowchart of determining a connection relationship between each CM and a trunk cable;
FIG. 6 is a schematic diagram of an SINR between CMs;
FIG. 7 is a schematic diagram after pieces of characteristic information of SINRs are clustered;
FIG. 8 is a schematic diagram of a topology of a network;
FIG. 9 is a schematic structural diagram of Embodiment 1 of a network topology determining apparatus according to this application;
FIG. 10 is a schematic structural diagram of Embodiment 2 of a network topology determining apparatus according to this application; and
FIG. 11 is a schematic structural diagram of Embodiment 3 of a network topology determining apparatus according to this application.

### DESCRIPTION OF EMBODIMENTS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

Embodiments of this application are applicable to a network topology determining scenario, and are specifically applicable to a co-frequency full duplex network topology determining scenario. Generally, in a co-frequency full duplex system, a grouping result and performance of a network are closely related to a topology of the network. In addition, in the co-frequency full duplex system, because uplink and downlink signals are transmitted at a same frequency, the system is relatively complex, and external interference (noise, non-linear, and the like) has relatively great impact on system performance. In this case, fault locating is relatively complex when a fault occurs in the network. Therefore, how to determine a detailed topology of the network is an urgent technical problem that needs to be resolved at present.

Generally, the network includes some or all of the following components: a network management system, a cable modem termination system (CMTS), a trunk cable, a splitter/tap (splitter or tap), a drop cable, a cable modem (CM), and the like. Therefore, determining the topology of the network means determining which components described above are included in the network and determining a connection relationship between the components.

Specific embodiments are used in the following to describe in detail the technical solutions of this application. The following several specific embodiments may be combined with each other, and a same or similar concept or process may not be described repeatedly in some embodiments.

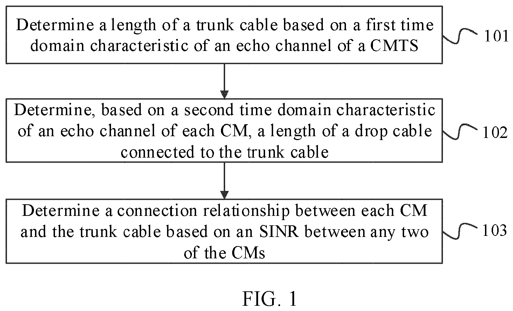

FIG. 1 is a schematic flowchart of Embodiment 1 of a network topology determining method according to this application. The method may be performed by any apparatus that performs a network topology determining method, and the apparatus may be implemented by using software and/or hardware. In this embodiment, the apparatus may be integrated into a network device. As shown in FIG. 1, the method in this embodiment may include the following steps.

Step 101: Determine a length of a trunk cable based on a first time domain characteristic of an echo channel of a CMTS.

In this embodiment, the first time domain characteristic of the echo channel of the CMTS may be, for example, an impulse response (impulse response, IR) or time domain reflectometry (TDR) of the echo channel. By analyzing the impulse response or the TDR, the network device may determine the length of the trunk cable and a quantity of splitters/taps included in a network.

In a possible implementation, the network device may obtain a frequency domain characteristic of the echo channel of the CMTS by using an echo cancellation (EC) module of the CMTS, and then may convert the frequency domain characteristic of the echo channel of the CMTS to the first time domain characteristic of the echo channel of the CMTS through fast Fourier transform (FFT), where the first time domain characteristic may be, for example, an impulse response or TDR. Certainly, the network device may alternatively obtain the first time domain characteristic of the echo channel of the CMTS directly.

After the first time domain characteristic of the echo channel of the CMTS is obtained, optionally, the network device may determine the quantity of splitters/taps based on a quantity of peaks in the first time domain characteristic, and in addition, may further determine the length of the trunk cable based on a time difference between two peaks in the first time domain characteristic. If the network includes one splitter/tap, the length of the trunk cable includes a length of a trunk cable between a port of the CMTS and a port of the splitter/tap; or if the network includes at least two splitters/taps, the length of the trunk cable includes a length of a trunk cable between a port of the CMTS and a port of a first splitter/tap and a length of a trunk cable between the port of the CMTS and a port of each of other second splitters/taps. The implementation in which the network includes one splitter/tap is not claimed as such. Specifically, the trunk cable is a cable used to connect the CMTS and each splitter/tap. If the network includes only one splitter/tap, it indicates that the splitter/tap is connected to the CMTS through the trunk cable. In this case, the determined length of the trunk cable is a length of a trunk cable between the port of the CMTS and a port of the splitter/tap. The implementation in which the network includes one splitter/tap is not claimed as such. If the network includes at least two splitters/taps, the determined length of the trunk cable includes a length of a trunk cable between the port of the CMTS and a port of a first splitter/tap and a length of a trunk cable between the port of the CMTS and a port of each of other second splitters/taps.

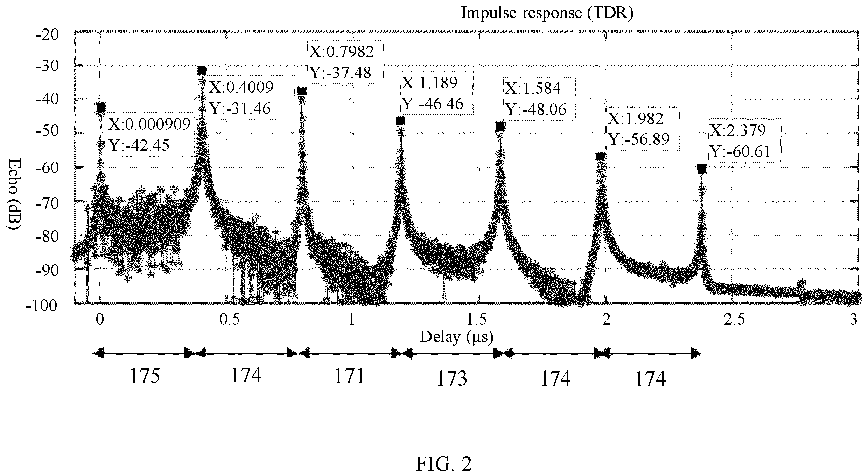

FIG. 2 is a schematic diagram of the first time domain characteristic. In FIG. 2, a horizontal coordinate indicates an echo reflection time, and a vertical coordinate indicates echo severity. Because an impulse response in FIG. 2 has a total of seven peaks, it indicates that there are a total of seven echo points in the network, and the seven echo points respectively correspond to the port of the CMTS and ports of splitters/taps. Therefore, it may be determined that there are six splitters/taps (TAP).

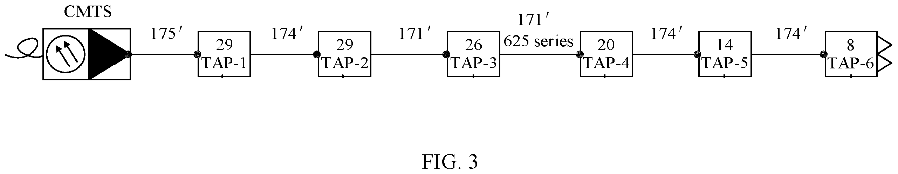

In addition, based on a time difference between any two peaks (a delay of an echo) in FIG. 2, a length of a cable between ports corresponding to the two peaks may be determined. In a specific implementation process, the length of the trunk cable may be calculated according to a formula ΔL₁ = Δt_{i,j} ^{∗} vi/2, where Δ_{ti,j} represents a time difference between an i^{th} peak and a j^{th} peak, ΔL₁ represents a length of a trunk cable between a port corresponding to the i^{th} peak and a port corresponding to the j^{th} peak, v₁ represents a propagation speed of a signal in a cable, and a value of v₁ is related to a type of the cable. For example, a time difference between a first peak and a second peak is 175µs in FIG. 2, and it may be determined that a length of a trunk cable between a port corresponding to the first peak and a port corresponding to the second peak is 175 ^{∗} v₁/2. A person skilled in the art may understand that the length of the trunk cable between the port corresponding to the first peak and the port corresponding to the second peak is a length of a trunk cable between the port of the CMTS and a port of a first splitter/tap. A time difference between the second peak and a third peak is 174 µs in FIG. 2, and it may be determined that a length of a trunk cable between the port corresponding to the second peak and a port corresponding to the third peak is 174 ^{∗} v₁/2, and so on. A length of a trunk cable between ports of other second splitters/taps may be calculated in the foregoing manner. FIG. 3 is a schematic diagram of connection of splitters/taps. As shown in FIG. 3, in the foregoing manner, it may be determined that there are a total of six splitters/taps (TAP) in the network, and a length of a trunk cable between the CMTS and a TAP-1 and a length of a trunk cable between other splitters/taps TAP-2 to TAP-6 may be determined.

It should be noted that step 101 may alternatively be performed by the CMTS, to be specific, the CMTS determines the length of the trunk cable based on the first time domain characteristic of the echo channel of the CMTS. A specific determining manner is similar to a manner of determining the length of the trunk cable by the network device, and details are not described herein.

Step 102: Determine, based on a second time domain characteristic of an echo channel of each cable modem CM, a length of a drop cable connected to the trunk cable.

In this embodiment, the second time domain characteristic of the echo channel of the CM may be, for example, an impulse response or TDR of the echo channel. By analyzing the impulse response or the TDR of the echo channel of the CM, the network device may determine the length of the drop cable connected to the trunk cable.

In a possible implementation, the network device may obtain a frequency domain characteristic of the echo channel of the CM by using an echo cancellation (EC) module of the CM, and then may convert the frequency domain characteristic of the echo channel of the CM to the second time domain characteristic of the echo channel of the CM through FFT, where the second time domain characteristic may be, for example, an impulse response or TDR. Certainly, the network device may alternatively obtain the second time domain characteristic of the echo channel of the CM directly.

After the second time domain characteristic of the echo channel of the CM is obtained, optionally, the network device may determine the length of the drop cable based on a time difference between two peaks in the second time domain characteristic. The length of the drop cable includes a length of a cable between each CM and the trunk cable.

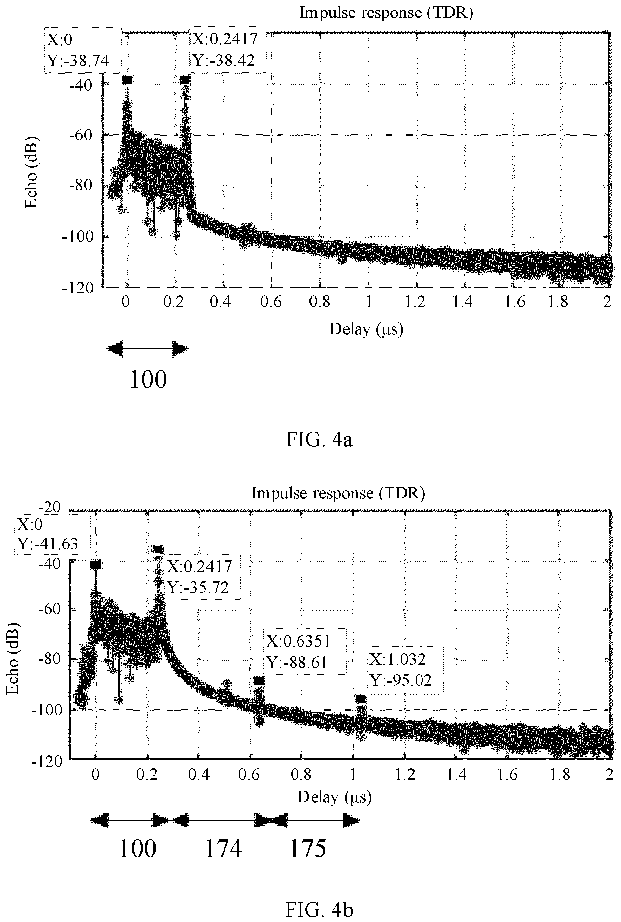

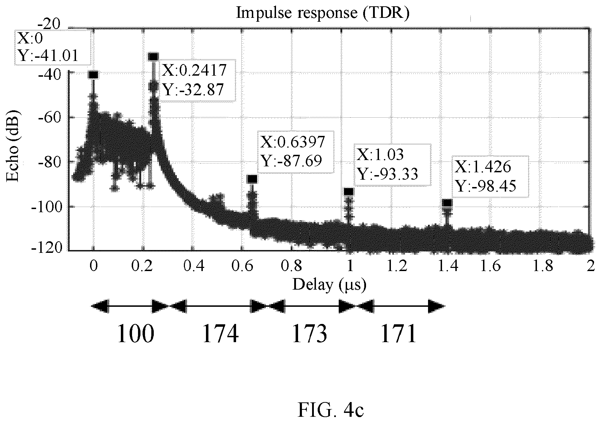

In a specific implementation process, the length of the drop cable may be calculated according to a formula ΔL₂ = Δt_{i,j} ^{∗} v₂/2, where Δt_{i,j} represents a time difference between an i^{th} peak and a j^{th} peak, ΔL₂ represents a length of a cable between a port corresponding to the i^{th} peak and a port corresponding to the j^{th} peak, v₂ represents a propagation speed of a signal in a cable, and a value of v₂ is related to a type of the cable. For example, FIG. 4a is a schematic diagram of the second time domain characteristic, FIG. 4b is another schematic diagram of the second time domain characteristic, FIG. 4c is still another schematic diagram of the second time domain characteristic. In FIG. 4a to FIG. 4c, a horizontal coordinate represents an echo reflection time, and a vertical coordinate represents echo severity. Based on a time difference 100 µs between a first peak and a second peak in FIG. 4a, it may be determined that a length of a cable between a CM 1 corresponding to the second time domain characteristic and the trunk cable is 100 x v₂/2. A person skilled in the art may understand that a length of a cable between the CM 1 and the drop cable is a length of a cable between a port of the CM 1 and a port of a corresponding splitter/tap. Based on a time difference 100 µs between a first peak and a second peak in FIG. 4b, it may be determined that a length of a cable between a CM 3 corresponding to the second time domain characteristic and the trunk cable is 100 x v₂/2. A person skilled in the art may understand that a length of a cable between the CM 3 and the drop cable is a length of a cable between a port of the CM 3 and a port of a corresponding splitter/tap. Based on a time difference 100 µs between a first peak and a second peak in FIG. 4c, it may be determined that a length of a cable between a CM 5 corresponding to the second time domain characteristic and the trunk cable is 100 ^{∗} v₂/2. A person skilled in the art may understand that a length of a cable between the CM 5 and the drop cable is a length of a cable between a port of the CM 5 and a port of a corresponding splitter/tap, and so on. A length of a cable between a port of each of other CMs and a port of a corresponding splitter/tap may be calculated in the foregoing manner.

In addition, when another splitter/tap exists in the network, a new peak appears in the middle of the first peak and the second peak in FIG. 4a to FIG. 4c, and strength of the peak is similar to strength of the first peak and strength of the second peak. In this way, it may be determined whether there is another splitter/tap in the network.

It should be noted that step 102 may alternatively be performed by the CM, to be specific, the CM determines the length of the drop cable based on the second time domain characteristic of the echo channel of the CM. A specific determining manner is similar to a manner of determining the length of the drop cable by the network device, and details are not described herein.

Step 103: Determine a connection relationship between each CM and the trunk cable based on a signal interference noise ratio (SINR) between any two of the CMs.

In this embodiment, determining the connection relationship between each CM and the trunk cable means determining a correspondence between each CM and a splitter/tap, to be specific, determining a splitter/tap connected to each CM. A co-frequency full duplex network has the following features: All CMs are grouped, CMs between which severe mutual interference exists are grouped into one group, and the CMs in the group are in a frequency division mode, to avoid interference. Groups are independent of each other, and may be in a co-frequency full duplex mode, to improve spectrum efficiency. Therefore, the network device needs to first measure severity of mutual interference between CMs in the network, to be specific, measure an SINR or a receive modulation error ratio (RxMER) between any two CMs, so as to determine the connection relationship between each CM and the trunk cable based on the foregoing feature.

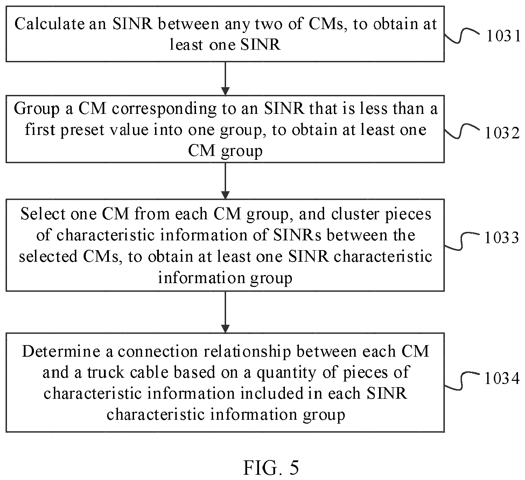

FIG. 5 is a schematic flowchart of determining the connection relationship between each CM and the trunk cable. As shown in FIG. 5, based on the foregoing co-frequency full duplex network feature, in a possible implementation, the determining the connection relationship between each CM and the trunk cable may include the following steps.

Step 1031: Calculate an SINR between the any two of the CMs, to obtain at least one SINR.

Specifically, the network device first needs to calculate an SINR between CMs, for example, calculate an SINR between a CM 1 and a CM 2, calculate an SINR between the CM 1 and a CM 3, and calculate an SINR between the CM 2 and the CM 3. In this way, at least one SINR may be obtained.

In addition, in this embodiment, the SINR is used as an example for description. If a calculated interference value between CMs is an RxMER, a manner of determining the connection relationship between each CM and the trunk cable based on the RxMER is similar to a manner of determining the connection relationship between each CM and the trunk cable based on the SINR, details are not described in this embodiment.

Step 1032: Group a CM corresponding to an SINR that is less than a first preset value into one group, to obtain at least one CM group.

Specifically, after the SINR between the any two CMs is calculated, the CM corresponding to the SINR that is less than the first preset value may be grouped into one group. Because interference between CMs connected to a same splitter/tap is very severe, that is, the SINR is relatively small, after the CM is grouped in the foregoing manner, it can be ensured that all CMs in a same group correspond to a same splitter/tap. In addition, it may be understood that a quantity of groups obtained after the grouping is equal to a quantity of splitters/taps. The first preset value may be selected based on experience, for example, may be 20 dB. A specific value of the first preset value is not limited herein in this embodiment.

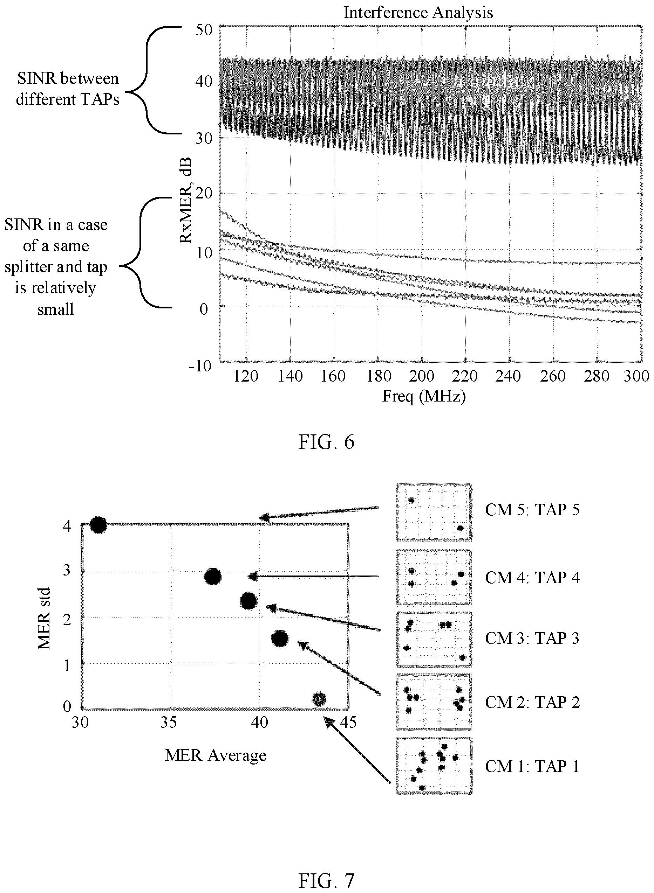

FIG. 6 is a schematic diagram of an SINR between CMs. As shown in FIG. 6, interference between CMs connected to different splitters/taps TAP is relatively small, and therefore, a value of an SINR is relatively large; and interference between CMs connected to a same TAP is relatively severe, and therefore, a value of an SINR is relatively small. In this way, a CM corresponding to an SINR that is less than the first preset value may be grouped into one group.

For example, if a CM 11, a CM 12, a CM 31, a CM 41, and a CM 42 exist in the network, it is obtained through calculation that an SINR between the CM 11 and the CM 12 is 16 dB, an SINR between the CM 11 and the CM 31 is 25 dB, an SINR between the CM 11 and the CM 41 is 28 dB, an SINR between the CM 11 and the CM 42 is 35 dB, an SINR between the CM 12 and the CM 31 is 25 dB, an SINR between the CM 12 and the CM 41 is 30 dB, an SINR between the CM 12 and the CM 42 is 35 dB, an SINR between the CM 31 and the CM 41 is 25 dB, an SINR between the CM 31 and the CM 42 is 35 dB, and an SINR between the CM 41 and the CM 42 is 15 dB. It is assumed that the first preset value is 20 dB, and the CM 11 and the CM 12 may be grouped into one group, the CM 41 and the CM 42 may be grouped into one group, and the remaining CM 31 may be grouped into one group. It may be learned, based on the co-frequency full duplex network feature, that the CM 11 and the CM 12 are connected to a same splitter/tap, the CM 41 and the CM 42 are connected to a same splitter/tap, and the CM 31 is connected to a splitter/tap.

Step 1033: Select one CM from each CM group, and cluster pieces of characteristic information of SINRs between the selected CMs, to obtain at least one SINR characteristic information group.

Specifically, after CMs are grouped, CMs grouped into a same CM group correspond to a same splitter/tap. Therefore, to improve efficiency of determining the connection relationship between each CM and the trunk cable, one CM may be selected from each CM group for processing, and after a connection relationship between the CM and the trunk cable is determined, a connection relationship between another CM in a same CM group and the trunk cable may also be determined. The network device may randomly select one CM from each CM group, or may select one CM from each CM group according to another rule, as long as it can be ensured that SINR measurement has been performed on the selected CM.

Because an i^{th} order CM connected to the trunk cable causes similar interference to (i+1)^{th} order CM, (i+2)^{th} order CM, and so on that follow the i^{th} order CM, characteristic information of an SINR between the i^{th} order CM and each CM following the i^{th} order CM is also similar. In this case, after one CM is selected from each CM group, and after pieces of characteristic information of SINRs between the selected CMs are clustered, CMs whose SINR characteristic information is similar may be grouped into one group. Clustering is performed based on similarity, and after the grouping, CMs in a same group have higher similarity than CMs in different groups.

In a possible manner, SINR curves between the selected CMs may be clustered, so that at least one SINR characteristic information group can be obtained. In addition, after characteristic extraction is performed on the SINR curves between the selected CMs, extracted characteristic parameters may alternatively be clustered, where the characteristic parameters may be, for example, average values or mean square errors, and a quantity of SINR characteristic information groups is obtained by subtracting 1 from the quantity of splitters/taps.

For example, if CMs selected from all CM groups include a CM 1, a CM 2, a CM 3, a CM 4, a CM 5, and a CM 6, and an SINR between the CM 1 and the CM 2 is an SINR 12, an SINR between the CM 1 and the CM 3 is an SINR 13, and so on, after pieces of characteristic information of the SINRs between the CMs are clustered, five SINR characteristic information groups are obtained. To be specific, the SINR 12, the SINR 13, an SINR 14, an SINR 15, an SINR 16, an SINR 21, an SINR 31, an SINR 41, an SINR 51, and an SINR 61 are grouped into a first group; an SINR 23, an SINR 24, an SINR 25, an SINR 26, an SINR 32, an SINR 42, an SINR 52, and an SINR 62 are grouped into a second group; an SINR 34, an SINR 35, an SINR 36, an SINR 43, an SINR 53, and an SINR 63 are grouped into a third group; an SINR 45, an SINR 46, an SINR 54, and an SINR 64 are grouped into a fourth group; and an SINR 56 and an SINR 65 are grouped into a fifth group. In a specific clustering process, distances between SINR curves of all pieces of characteristic information may be calculated, and pieces of characteristic information with a close distance are grouped into one SNIR characteristic information group.

For another example, if CMs selected from all CM groups include a CM 1, a CM 2, a CM 3, a CM 4, a CM 5, and a CM 6, and an SINR between the CM 1 and the CM 2 is an SINR 12, an SINR between the CM 1 and the CM 3 is an SINR 13, and so on, after characteristic extraction is performed on the SINRs between the CMs, and average values or mean square errors of the SINRs are calculated, the average values or the mean square errors may be clustered. FIG. 7 is a schematic diagram after pieces of characteristic information of SINRs are clustered. As shown in FIG. 7, average values or mean square errors of the SINRs may be grouped into five groups.

Step 1034: Determine the connection relationship between each CM and the trunk cable based on a quantity of pieces of characteristic information included in each SINR characteristic information group.

Specifically, after the pieces of characteristic information of the SINRs between the CMs are clustered, to obtain at least one SINR characteristic information group, the connection relationship between each CM and the trunk cable is determined based on the quantity of pieces of characteristic information included in each SINR characteristic information group. Specifically, if the network device clusters SINR curves, the connection relationship between each CM and the trunk cable is determined based on a quantity of SINR curves included in the SINR characteristic information group. If the network device clusters SINR characteristic parameters, the connection relationship between each CM and the trunk cable is determined based on a quantity of characteristic parameters included in the SINR characteristic information group.

Optionally, a same CM corresponding to characteristic information in an i^{th} SINR characteristic information group is determined as an i^{th} order CM connected to the trunk cable, where a quantity of pieces of characteristic information in the i^{th} SINR characteristic information group is less than a quantity of pieces of characteristic information in an (i-1)^{th} SINR characteristic information group, and i is an integer greater than or equal to 2.

Specifically, after the at least one SINR characteristic information group is sorted in descending order of quantities of pieces of characteristic information, a same CM corresponding to characteristic information in an SINR characteristic information group that includes a largest quantity of pieces of characteristic information is determined as a first order CM connected to the trunk cable, to be specific, the CM is connected to a first order splitter/tap; and a same CM corresponding to characteristic information in an SINR characteristic information group that includes a second largest quantity of pieces of characteristic information is determined as a second order CM connected to the trunk cable, to be specific, the CM is connected to a second order splitter/tap. By analogy, the connection relationship between each CM and the trunk cable may be determined, to be specific, a correspondence between each CM and a splitter/tap is determined.

For example, in the five SINR characteristic information groups in step 1033, if there are a largest quantity of SINR curves in the first group, a same CM 1 corresponding to the SINR curves in the first group is determined as a first order CM connected to the trunk cable; and if there are a second largest quantity of SINR curves in the second group, a same CM 2 corresponding to the SINR curves in the second group is determined as a second order CM connected to the trunk cable. By analogy, the connection relationship between each CM and the trunk cable may be determined.

In addition, as shown in FIG. 7, if the average values or the mean square errors of the SINRs are clustered, quantities of characteristic parameters in the SINR characteristic information groups may alternatively be counted. For example, if there are a largest quantity of characteristic parameters in the first group, a same CM 1 corresponding to the characteristic parameters in the first group is determined as a first order CM connected to the trunk cable, to be specific, the CM 1 is connected to a TAP 1; and if there are a second largest quantity of characteristic parameters in the second group, a same CM 2 corresponding to the characteristic parameters in the second group is determined as a second order CM connected to the trunk cable, to be specific, the CM 2 is connected to a TAP 2. By analogy, the connection relationship between each CM and the trunk cable may be determined.

Step 104: Determine a topology of the network based on the length of the trunk cable, the length of the drop cable, and the connection relationship between each CM and the trunk cable.

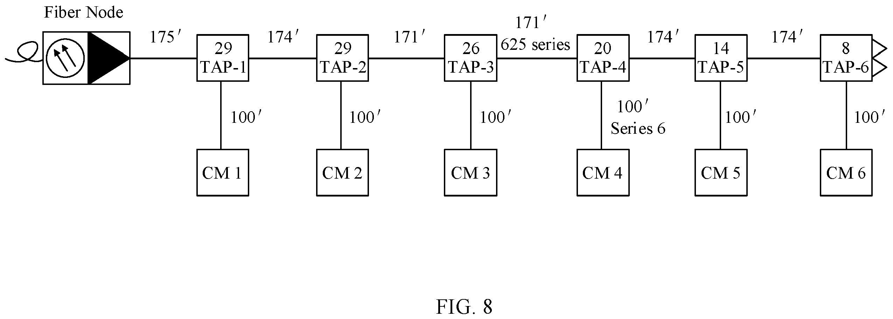

In this embodiment, FIG. 8 is a schematic diagram of the topology of the network. As shown in FIG. 8, after the length of the trunk cable, the length of the drop cable, and the connection relationship between each CM and the trunk cable are determined, the topology of the network may be determined. For example, it is determined, based on a quantity of peaks in the first time domain characteristic, that the network includes six splitters/taps; and it is determined, based on a time difference between peaks in the first time domain characteristic, that a length of a trunk cable between the CMTS and a first TAP-1 is 175', a length of a trunk cable between the TAP-1 and a TAP-2 is 174', a length of a trunk cable between the TAP-2 and a TAP-3 is 171', a length of a trunk cable between the TAP-3 and a TAP-4 is 173', a length of a trunk cable between the TAP-4 and a TAP-5 is 174', and a length of a trunk cable between the TAP-5 and a TAP-6 is 174'. Then, it is determined, based on a time difference between peaks in the second time domain characteristic, that a length of a drop cable between a CM 1 and a corresponding splitter/tap is 100', a length of a drop cable between a CM 2 and a corresponding splitter/tap is 100', a length of a drop cable between a CM 3 and a corresponding splitter/tap is 100', a length of a drop cable between a CM 4 and a corresponding splitter/tap is 100', a length of a drop cable between a CM 5 and a corresponding splitter/tap is 100', and a length of a drop cable between a CM6 and a corresponding splitter/tap is 100'. Finally, it is determined, based on an SINR between any two CMs, that the CM 1 is a first order CM connected to the trunk cable, to be specific, the splitter/tap corresponding to the CM 1 is the TAP-1, the splitter/tap corresponding to the CM 2 is the TAP-2, the splitter/tap corresponding to the CM 3 is the TAP-3, the splitter/tap corresponding to the CM 4 is the TAP-4, the splitter/tap corresponding to the CM 5 is the TAP-5, and the splitter/tap corresponding to the CM 6 is the TAP-6. In this way, the topology of the network shown in FIG. 8 may be determined.

It may be understood that step 101 to step 103 are not necessarily performed in a sequence, for example, step 101 to step 103 may be performed in a same time period.

According to the network topology determining method provided in this embodiment of this application, the length of the trunk cable is determined based on the first time domain characteristic of the echo channel of the CMTS, the length of the drop cable connected to the trunk cable is determined based on the second time domain characteristic of the echo channel of each CM, then the connection relationship between each CM and the trunk cable is determined based on the SINR between the any two of the CMs, and finally, the topology of the network is determined based on the length of the trunk cable, the length of the drop cable, and the connection relationship between each CM and the trunk cable. In this way, the topology of the network is simply determined.

Optionally, based on the foregoing embodiments, the network device may further determine whether a strength value of the first time domain characteristic and/or a strength value of the second time domain characteristic exceed/exceeds a second preset value, and send prompt information if the strength value of the first time domain characteristic and/or the strength value of the second time domain characteristic exceed/exceeds the second preset value, where the prompt information is used to indicate an echo degree and/or a location of an echo reflection point of the CMTS and/or an echo degree and/or a location of an echo reflection point of the CM corresponding to the second time domain characteristic.

Specifically, echo severity may be obtained by analyzing the strength value of the first time domain characteristic and/or the strength value of the second time domain characteristic. For example, a threshold or a threshold line may be set, and when the strength value of the first time domain characteristic and/or the strength value of the second time domain characteristic exceed/exceeds the second preset value, it indicates that an echo is very severe, and a location of a severe echo point may be learned through delay analysis. In this case, prompt information is sent to a user, so as to give a network quality monitoring alarm, so that network monitoring and locating may be performed. This plays a key role in fault locating and network operation and maintenance.

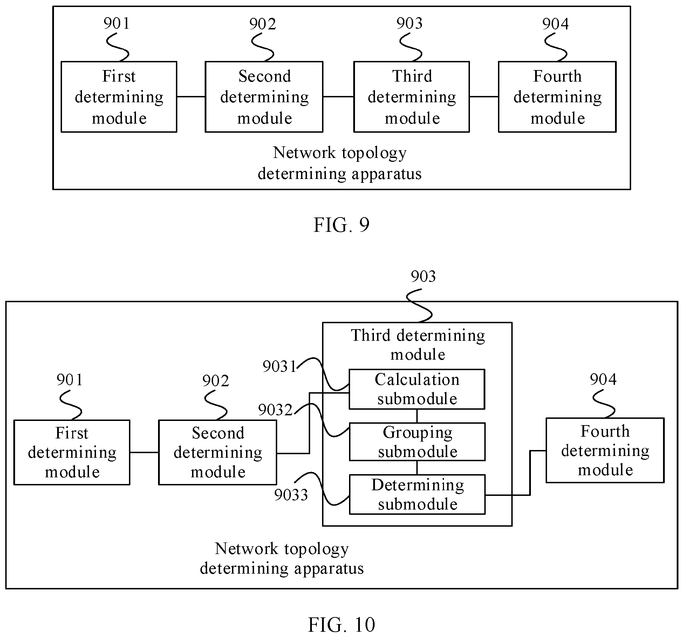

FIG. 9 is a schematic structural diagram of Embodiment 1 of a network topology determining apparatus according to this application. The apparatus may be located on a network device. Referring to FIG. 9, the apparatus includes: a first determining module 901, a second determining module 902, a third determining module 903, and a fourth determining module 904.

The first determining module 901 is configured to determine a length of a trunk cable based on a first time domain characteristic of an echo channel of a cable modem termination system CMTS.

The second determining module 902 is configured to determine, based on a second time domain characteristic of an echo channel of each cable modem CM, a length of a drop cable connected to the trunk cable.

The third determining module 903 is configured to determine a connection relationship between each CM and the trunk cable based on a signal to interference plus noise ratio SINR between any two of the CMs.

The fourth determining module 904 is configured to determine a topology of a network based on the length of the trunk cable, the length of the drop cable, and the connection relationship between each CM and the trunk cable.

The network may includes one splitter/tap, and the length of the trunk cable includes a length of a trunk cable between a port of the CMTS and a port of the splitter/tap. The implementation in which the network includes one splitter/tap is not claimed as such. According to the invention, the network includes at least two splitters/taps, and the length of the trunk cable includes a length of a trunk cable between a port of the CMTS and a port of a first splitter/tap and a length of a trunk cable between the port of the CMTS and a port of each of other second splitters/taps.

Optionally, the length of the drop cable includes a length of a cable between each CM and the trunk cable.

FIG. 10 is a schematic structural diagram of Embodiment 2 of a network topology determining apparatus according to this application. The apparatus may be located on a network device. Referring to FIG. 10, based on the embodiment shown in FIG. 9, the third determining module 903 includes:
a calculation submodule 9031, configured to calculate an SINR between the any two of the CMs, to obtain at least one SINR;
a grouping submodule 9032, configured to group a CM corresponding to an SINR that is less than a first preset value into one group, to obtain at least one CM group; where
the grouping submodule 9032 is further configured to select one CM from each CM group, and cluster pieces of characteristic information of SINRs between the selected CMs, to obtain at least one SINR characteristic information group; and
a determining submodule 9033, configured to determine the connection relationship between each CM and the trunk cable based on a quantity of pieces of characteristic information included in each SINR characteristic information group.

Optionally, the determining submodule 9033 is specifically configured to:
determine a same CM corresponding to characteristic information in an i^{th} SINR characteristic information group as an i^{th} order CM connected to the trunk cable, where a quantity of pieces of characteristic information in the i^{th} SINR characteristic information group is less than a quantity of pieces of characteristic information in an (i-1)^{th} SINR characteristic information group, and i is an integer greater than or equal to 2.

Optionally, the first determining module 901 is specifically configured to:
determine the length of the trunk cable based on a time difference between two peaks in the first time domain characteristic.

Optionally, the second determining module 902 is specifically configured to:
determine the length of the drop cable based on a time difference between two peaks in the second time domain characteristic.

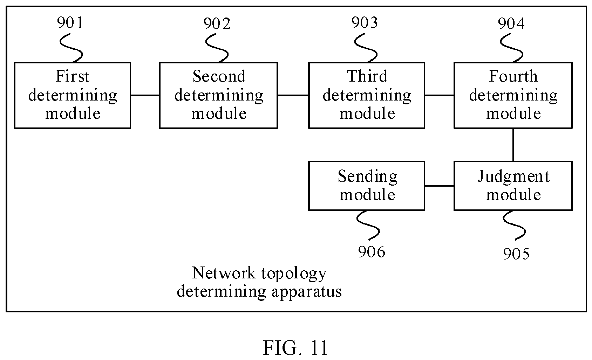

FIG. 11 is a schematic structural diagram of Embodiment 3 of a network topology determining apparatus according to this application. The apparatus may be located on a network device. Referring to FIG. 11, based on the embodiment shown in FIG. 9, the apparatus further includes:
a judgment module 905, configured to determine a strength value of the first time domain characteristic and/or a strength value of the second time domain characteristic exceed and/or exceeds a second preset value; and
a sending module 906, configured to send prompt information when the judgment module 905 determines that the strength value of the first time domain characteristic and/or the strength value of the second time domain characteristic exceed and/or exceeds the second preset value, where the prompt information is used to indicate an echo degree and/or a location of an echo reflection point of the CMTS and/or an echo degree and/or a location of an echo reflection point of the CM corresponding to the second time domain characteristic.

The foregoing apparatus may be configured to perform the method provided in the foregoing corresponding method embodiment. Specific implementations and technical effects are similar to those of the method provided in the foregoing corresponding method embodiment, and details are not described herein.

It should be noted that division of the modules in the foregoing network topology determining apparatus is merely logical function division. In actual implementation, all or some of the modules may be integrated into one physical entity, or the modules may be physically separated. In addition, all of the modules may be implemented in a form of software invoked by a processing element or in a form of hardware. Alternatively, some of the units may be implemented in a form of software invoked by a processing element, and some of the units may be implemented in a form of hardware. For example, the sending module may be a separately disposed processing element, or may be integrated into a chip of the network device. In addition, the sending module may be stored in a memory as a program and invoked by a processing element of the network device to perform a function of the sending module. Implementations of other modules are similar to the implementation of the sending module. In addition, all or some of the modules may be integrated together, or may be implemented separately. The processing module herein may be an integrated circuit and has a signal processing capability. In an implementation process, steps in the foregoing methods or the foregoing modules can be implemented by using a hardware integrated logical circuit in the processing element, or by using instructions in a form of software. In addition, the foregoing sending module is a sending control module, and may receive, by using a sending apparatus of the network device, for example, an antenna and a radio frequency apparatus, information sent by a base station.

The foregoing modules may be configured as one or more integrated circuits for implementing the foregoing methods, for example, one or more application specific integrated circuits (ASIC), one or more microprocessors (DSP), or one or more field programmable gate arrays (FPGA). For another example, when a module is implemented in a form of a program invoked by a processing element, the processing element may be a general-purpose processor, for example, a central processing unit (CPU) or another processor that can invoke the program. For another example, the units may be integrated together, and implemented in a form of a system on chip (SOC).

This application further provides a network topology determining system, including the network topology determining apparatus according to any one of the foregoing embodiments.

This application further provides a storage medium, including: a readable storage medium and a computer program, where the computer program is configured to implement the network topology determining method provided in any one of the foregoing embodiments.

This application further provides a program product, where the program product includes a computer program (that is, an executable instruction), and the computer program is stored in a readable storage medium. At least one processor of a sending device may read the computer program from the readable storage medium, and the at least one processor executes the computer program, so that the sending device implements the network topology determining method provided in the foregoing implementations.

An embodiment of this application further provides a network topology determining apparatus, including at least one storage element and at least one processing element. The at least one storage element is configured to store a program, and when the program is executed, the network topology determining apparatus is enabled to perform an operation of the network device in any one of the foregoing embodiments. The apparatus may be a network device chip.

All or some of the steps of the foregoing method embodiments may be implemented by a program instructing relevant hardware. The foregoing program may be stored in a computer-readable memory. When the program is executed, the steps of the methods in the embodiments are performed. The memory (storage medium) includes: a read-only memory (ROM), a RAM, a flash memory, a hard disk, a solid state disk, a magnetic tape, a floppy disk, an optical disc, and any combination thereof.

The protection scope of this application shall be subject to the protection scope of the claims.

## Claims

1. A network topology determining method for use in a network, the network comprising a trunk cable, a cable modem termination system, CMTS, at least two splitters/taps, and at least two cable modems, CM, wherein each CM is connected to a corresponding splitter/tap, the method comprising:
determining (101) a length of the trunk cable based on a first time domain characteristic of an echo channel of the CMTS;
determining (102), based on a second time domain characteristic of an echo channel of each CM a length of a drop cable connected to the trunk cable, wherein the length of the drop cable comprises a length of a cable between each CM and the trunk cable;
determining (103) a correspondence between the at least two CMs and the at least two splitters/taps based on a signal to interference plus noise ratio SINR between any two of the CMs; and
determining a topology of a network based on the length of the trunk cable, the length of the drop cable, and the correspondence between the at least two CMs and the at least two splitters/taps.

2. The method according to claim 1, wherein the network comprises at least two splitters/taps, and the length of the trunk cable comprises a length of a trunk cable between a port of the CMTS and a port of a first splitter/tap and a length of a trunk cable between the port of the CMTS and a port of each of other second splitters/taps.

3. The method according to claim 1, wherein the determining a correspondence between the at least two CMs and the at least two splitters/taps based on a signal to interference plus noise ratio SINR between any two of the CMs comprises:
calculating an SINR between the any two of the CMs, to obtain at least one SINR;
grouping a CM corresponding to an SINR that is less than a first preset value into one group, to obtain at least one CM group;
selecting one CM from each CM group, and clustering pieces of characteristic information of SINRs between the selected CMs, to obtain at least one SINR characteristic information group; and
determining the correspondence between the at least two CMs and the at least two splitters/taps based on a quantity of pieces of characteristic information comprised in each SINR characteristic information group.

4. The method according to claim 3, wherein the determining the correspondence between the at least two CMs and the at least two splitters/taps based on a quantity of pieces of characteristic information comprised in each SINR characteristic information group comprises:
determining a same CM corresponding to characteristic information in an i^{th} SINR characteristic information group as an i^{th} order CM connected to the trunk cable, wherein a quantity of pieces of characteristic information in the i^{th} SINR characteristic information group is less than a quantity of pieces of characteristic information in an (i-1)^{th} SINR characteristic information group, and i is an integer greater than or equal to 2.

5. The method according to any one of claims 1 to 4, wherein the determining a length of a trunk cable based on a first time domain characteristic of an echo channel of a CMTS comprises:
determining the length of the trunk cable based on a time difference between two peaks in the first time domain characteristic.

6. The method according to any one of claims 1 to 5, wherein the determining, based on a second time domain characteristic of an echo channel of each cable modem CM, a length of a drop cable connected to the trunk cable comprises:
determining the length of the drop cable based on a time difference between two peaks in the second time domain characteristic.

7. The method according to any one of claims 1 to 6, wherein the method further comprises:
determining whether a strength value of the first time domain characteristic and/or a strength value of the second time domain characteristic exceed and/or exceeds a second preset value; and
sending prompt information if the strength value of the first time domain characteristic and/or the strength value of the second time domain characteristic exceed and/or exceeds the second preset value, wherein the prompt information is used to indicate an echo degree and/or a location of an echo reflection point of the CMTS and/or an echo degree and/or a location of an echo reflection point of the CM corresponding to the second time domain characteristic.

8. A network topology determining apparatus for use in a network, the network comprising a trunk cable, a cable modem termination system, CMTS, at least two splitters/taps, and at least two cable modems, CM, wherein each CM is connected to a corresponding splitter/tap, the apparatus comprising:
a first determining module (901), configured to determine a length of the trunk cable based on a first time domain characteristic of an echo channel of the CMTS;
a second determining module (902), configured to determine, based on a second time domain characteristic of an echo channel of each CM a length of a drop cable connected to the trunk cable, wherein the length of the drop cable comprises a length of a cable between each CM and the trunk cable;
a third determining module (903), configured to determine a correspondence between the at least two CMs and the at least two splitters/taps based on a signal to interference plus noise ratio SINR between any two of the CMs; and
a fourth determining module (904), configured to determine a topology of a network based on the length of the trunk cable, the length of the drop cable, and the correspondence between the at least two CMs and the at least two splitters/taps.

9. The apparatus according to claim 8, wherein the network comprises at least two splitters/taps, and the length of the trunk cable comprises a length of a trunk cable between a port of the CMTS and a port of a first splitter/tap and a length of a trunk cable between the port of the CMTS and a port of each of other second splitters/taps.

10. The apparatus according to claim 8, wherein the third determining module comprises:
a calculation submodule (9031), configured to calculate an SINR between the any two of the CMs, to obtain at least one SINR;
a grouping submodule (9032), configured to group a CM corresponding to an SINR that is less than a first preset value into one group, to obtain at least one CM group; wherein
the grouping submodule is further configured to select one CM from each CM group, and cluster pieces of characteristic information of SINRs between the selected CMs, to obtain at least one SINR characteristic information group; and
a determining submodule (9033), configured to determine the correspondence between the at least two CMs and the at least two splitters/taps based on a quantity of pieces of characteristic information comprised in each SINR characteristic information group.

11. The apparatus according to claim 10, wherein the determining submodule is specifically configured to:
determine a same CM corresponding to characteristic information in an i^{th} SINR characteristic information group as an i^{th} order CM connected to the trunk cable, wherein a quantity of pieces of characteristic information in the i^{th} SINR characteristic information group is less than a quantity of pieces of characteristic information in an (i-1)^{th} SINR characteristic information group, and i is an integer greater than or equal to 2.

12. The apparatus according to any one of claims 8 to 11, wherein the first determining module is specifically configured to:
determine the length of the trunk cable based on a time difference between two peaks in the first time domain characteristic.

13. The apparatus according to any one of claims 8 to 12, wherein the second determining module is specifically configured to:
determine the length of the drop cable based on a time difference between two peaks in the second time domain characteristic.

14. The apparatus according to any one of claims 8 to 13, wherein the apparatus further comprises:
a judgment module (905), configured to determine a strength value of the first time domain characteristic and/or a strength value of the second time domain characteristic exceed and/or exceeds a second preset value; and
a sending module (906), configured to send prompt information when the judgment module determines that the strength value of the first time domain characteristic and/or the strength value of the second time domain characteristic exceed and/or exceeds the second preset value, wherein the prompt information is used to indicate an echo degree and/or a location of an echo reflection point of the CMTS and/or an echo degree and/or a location of an echo reflection point of the CM corresponding to the second time domain characteristic.

15. A network topology determining system, comprising the apparatus according to any one of claims 8 to 14.

## Patentansprüche

1. Verfahren zum Bestimmen einer Netzwerktopologie für die Verwendung in einem Netzwerk, wobei das Netzwerk ein Stammkabel, ein CMTS, "Cable Modem Termination System", mindestens zwei Splitter/Abzweiger und mindestens zwei Kabelmodems, CMs, umfasst, wobei jedes CM mit einem entsprechenden Splitter/Abzweiger verbunden ist, wobei das Verfahren Folgendes umfasst:
Bestimmen (101) einer Länge des Stammkabels basierend auf einer ersten Zeitbereichseigenschaft eines Echokanals des CMTS,
Bestimmen (102) einer Länge eines Verbindungskabels, das mit dem Stammkabel verbunden ist, basierend auf einer zweiten Zeitbereichseigenschaft eines Echokanals jedes CM, wobei die Länge des Verbindungskabels eine Länge eines Kabels zwischen jedem CM und dem Stammkabel umfasst,
Bestimmen (103) einer Übereinstimmung zwischen den mindestens zwei CMs und den mindestens zwei Splittern/Abzweigern basierend auf einem Signal-Interferenz-Impulsrauschverhältnis, SINR, zwischen beliebigen zwei der CMs und
Bestimmen einer Topologie eines Netzwerks basierend auf der Länge des Stammkabels, der Länge des Verbindungskabels und der Übereinstimmung zwischen den mindestens zwei CMs und den mindestens zwei Splittern/Abzweigern.

2. Verfahren nach Anspruch 1, wobei das Netzwerk mindestens zwei Splitter/Abzweiger umfasst und die Länge des Stammkabels eine Länge eines Stammkabels zwischen einem Anschluss des CMTS und einem Anschluss eines ersten Splitters/Abzweigers und einer Länge eines Stammkabels zwischen dem Anschluss des CMTS und einem Anschluss von jedem von weiteren zweiten Splittern/Abzweigern umfasst.

3. Verfahren nach Anspruch 1, wobei das Bestimmen einer Übereinstimmung zwischen den mindestens zwei CMs und den mindestens zwei Splittern/Abzweigern basierend auf einem Signal-Interferenz-Impulsrauschverhältnis, SINR, zwischen beliebigen zwei der CMs Folgendes umfasst:
Berechnen eines SINR zwischen den beliebigen zwei der CMs, um mindestens ein SINR zu gewinnen,
Gruppieren eines CM entsprechend einem SINR, das kleiner als ein erster voreingestellter Wert ist, in eine Gruppe, um mindestens eine CM-Gruppe zu gewinnen,
Auswählen eines CM aus jeder CM-Gruppe und Clustern von Eigenschaftsinformationen von SINRs zwischen den ausgewählten CMs, um mindestens eine Gruppe von SINR-Eigenschaftsinformationen zu gewinnen, und
Bestimmen der Übereinstimmung zwischen den mindestens zwei CMs und den mindestens zwei Splittern/Abzweigern basierend auf einer Quantität von Eigenschaftsinformationen, die in jeder Gruppe von SINR-Eigenschaftsinformationen enthalten sind.

4. Verfahren nach Anspruch 3, wobei das Bestimmen der Übereinstimmung zwischen den mindestens zwei CMs und den mindestens zwei Splittern/Abzweigern basierend auf einer Quantität von Eigenschaftsinformationen, die in jeder Gruppe von SINR-Eigenschaftsinformationen enthalten sind, Folgendes umfasst:
Bestimmen eines gleichen CM entsprechend Eigenschaftsinformationen in einer i. Gruppe von SINR-Eigenschaftsinformationen als ein CM der i. Ordnung, das mit dem Stammkabel verbunden ist, wobei eine Quantität von Eigenschaftsinformationen in der i. Gruppe von SINR-Eigenschaftsinformationen kleiner als eine Quantität von Eigenschaftsinformationen in einer (i-1). Gruppe von SINR-Eigenschaftsinformationen ist und i eine Ganzzahl größer als oder gleich 2 ist.

5. Verfahren nach einem der Ansprüche 1 bis 4, wobei das Bestimmen einer Länge eines Stammkabels basierend auf einer ersten Zeitbereichseigenschaft eines Echokanals eines CMTS Folgendes umfasst:
Bestimmen einer Länge des Stammkabels basierend auf einer Zeitdifferenz zwischen zwei Spitzenwerten in der ersten Zeitbereichseigenschaft.

6. Verfahren nach einem der Ansprüche 1 bis 5, wobei das Bestimmen einer Länge eines Verbindungskabels, das mit dem Stammkabel verbunden ist, basierend auf einer zweiten Zeitbereichseigenschaft eines Echokanals jedes Kabelmodems, CM, Folgendes umfasst:
Bestimmen der Länge des Verbindungskabels basierend auf einer Zeitdifferenz zwischen zwei Spitzenwerten in der zweiten Zeitbereichseigenschaft.

7. Verfahren nach einem der Ansprüche 1 bis 6, wobei das Verfahren ferner Folgendes umfasst:
Bestimmen, ob ein Wert der Stärke der ersten Zeitbereichseigenschaft und/oder ein Wert der Stärke der zweiten Zeitbereichseigenschaft einen zweiten voreingestellten Wert übersteigen/übersteigt, und
Senden zeitnaher Informationen, wenn der Wert der Stärke der ersten Zeitbereichseigenschaft und/oder der Wert der Stärke der zweiten Zeitbereichseigenschaft den zweiten voreingestellten Wert übersteigen/übersteigt, wobei die zeitnahen Informationen verwendet werden, um einen Echograd und/oder eine Position eines Echoreflexionspunktes des CMTS und/oder einen Echograd und/oder eine Position eines Echoreflexionspunktes des CM entsprechend der zweiten Zeitbereichseigenschaft anzugeben.

8. Vorrichtung zum Bestimmen einer Netzwerktopologie für die Verwendung in einem Netzwerk, wobei das Netzwerk ein Stammkabel, ein CMTS, "Cable Modem Termination System", mindestens zwei Splitter/Abzweiger und mindestens zwei Kabelmodems, CMs, umfasst, wobei jedes CM mit einem entsprechenden Splitter/Abzweiger verbunden ist, wobei die Vorrichtung Folgendes umfasst:
ein erstes Bestimmungsmodul (901), das zum Bestimmen einer Länge des Stammkabels basierend auf einer ersten Zeitbereichseigenschaft eines Echokanals des CMTS konfiguriert ist,
ein zweites Bestimmungsmodul (902), das zum Bestimmen einer Länge eines Verbindungskabels, das mit dem Stammkabel verbunden ist, basierend auf einer zweiten Zeitbereichseigenschaft eines Echokanals jedes CM konfiguriert ist, wobei die Länge des Verbindungskabels eine Länge eines Kabels zwischen jedem CM und dem Stammkabel umfasst,
ein drittes Bestimmungsmodul (903), das zum Bestimmen einer Übereinstimmung zwischen den mindestens zwei CMs und den mindestens zwei Splittern/Abzweigern basierend auf einem Signal-Interferenz-Impulsrauschverhältnis, SINR, zwischen beliebigen zwei der CMs konfiguriert ist, und
ein viertes Bestimmungsmodul (904), das zum Bestimmen einer Topologie eines Netzwerks basierend auf der Länge des Stammkabels, der Länge des Verbindungskabels und der Übereinstimmung zwischen den mindestens zwei CMs und den mindestens zwei Splittern/Abzweigern konfiguriert ist.

9. Vorrichtung nach Anspruch 8, wobei das Netzwerk mindestens zwei Splitter/Abzweiger umfasst und die Länge des Stammkabels eine Länge eines Stammkabels zwischen einem Anschluss des CMTS und einem Anschluss eines ersten Splitters/Abzweigers und einer Länge eines Stammkabels zwischen dem Anschluss des CMTS und einem Anschluss von jedem von weiteren zweiten Splittern/Abzweigern umfasst.

10. Vorrichtung nach Anspruch 8, wobei das dritte Bestimmungsmodul Folgendes umfasst:
ein Berechnungsuntermodul (9031), das zum Berechnen eines SINR zwischen den beliebigen zwei der CMs, um mindestens ein SINR zu gewinnen, konfiguriert ist,
ein Gruppierungsuntermodul (9032), das zum Gruppieren eines CM entsprechend einem SINR, das kleiner als ein erster voreingestellter Wert ist, in eine Gruppe, um mindestens eine CM-Gruppe zu gewinnen, konfiguriert ist,
wobei das Gruppierungsuntermodul ferner zum Auswählen eines CM aus jeder CM-Gruppe und Clustern von Eigenschaftsinformationen von SINRs zwischen den ausgewählten CMs, um mindestens eine Gruppe von SINR-Eigenschaftsinformationen zu gewinnen, konfiguriert ist, und
ein Bestimmungsuntermodul (9033), das zum Bestimmen der Übereinstimmung zwischen den mindestens zwei CMs und den mindestens zwei Splittern/Abzweigern basierend auf einer Quantität von Eigenschaftsinformationen, die in jeder Gruppe von SINR-Eigenschaftsinformationen enthalten sind, konfiguriert ist.

11. Vorrichtung nach Anspruch 10, wobei das Bestimmungsuntermodul insbesondere für Folgendes konfiguriert ist:
Bestimmen eines gleichen CM entsprechend Eigenschaftsinformationen in einer i. Gruppe von SINR-Eigenschaftsinformationen als ein CM der i. Ordnung, das mit dem Stammkabel verbunden ist, wobei eine Quantität von Eigenschaftsinformationen in der i. Gruppe von SINR-Eigenschaftsinformationen kleiner als eine Quantität von Eigenschaftsinformationen in einer (i-1). Gruppe von SINR-Eigenschaftsinformationen ist und i eine Ganzzahl größer als oder gleich 2 ist.

12. Vorrichtung nach einem der Ansprüche 8 bis 11, wobei das erste Bestimmungsmodul insbesondere für Folgendes konfiguriert ist:
Bestimmen der Länge des Stammkabels basierend auf einer Zeitdifferenz zwischen zwei Spitzenwerten in der ersten Zeitbereichseigenschaft.

13. Vorrichtung nach einem der Ansprüche 8 bis 12, wobei das zweite Bestimmungsmodul insbesondere für Folgendes konfiguriert ist:
Bestimmen der Länge des Verbindungskabels basierend auf einer Zeitdifferenz zwischen zwei Spitzenwerten in der zweiten Zeitbereichseigenschaft.

14. Vorrichtung nach einem der Ansprüche 8 bis 13, wobei die Vorrichtung ferner Folgendes umfasst:
ein Bewertungsmodul (905), das zum Bestimmen, ob ein Wert der Stärke der ersten Zeitbereichseigenschaft und/oder ein Wert der Stärke der zweiten Zeitbereichseigenschaft einen zweiten voreingestellten Wert übersteigen/übersteigt, konfiguriert ist, und
ein Sendemodul (906), das zum Senden zeitnaher Informationen, wenn das Bewertungsmodul bestimmt, dass der Wert der Stärke der ersten Zeitbereichseigenschaft und/oder der Wert der Stärke der zweiten Zeitbereichseigenschaft den zweiten voreingestellten Wert übersteigen/übersteigt, konfiguriert ist, wobei die zeitnahen Informationen verwendet werden, um einen Echograd und/oder eine Position eines Echoreflexionspunktes des CMTS und/oder einen Echograd und/oder eine Position eines Echoreflexionspunktes des CM entsprechend der zweiten Zeitbereichseigenschaft anzugeben.

15. System zum Bestimmen einer Netzwerktopologie, die Vorrichtung nach einem der Ansprüche 8 bis 14 umfassend.

## Revendications

1. Procédé de détermination de topologie de réseau destiné à être utilisé dans un réseau, le réseau comportant un câble d'infrastructure, un système de terminaison de modem câble, CMTS, au moins deux séparateurs/prises, et au moins deux modems câble, CM, chaque CM étant relié à un séparateur/une prise correspondants, le procédé comportant les étapes consistant à :
déterminer (101) une longueur du câble d'infrastructure d'après une première caractéristique en domaine temporel d'un canal d'écho du CMTS ;
déterminer (102), d'après une deuxième caractéristique en domaine temporel d'un canal d'écho de chaque CM, une longueur d'un câble d'embranchement relié au câble d'infrastructure, la longueur du câble d'embranchement comportant une longueur d'un câble entre chaque CM et le câble d'infrastructure ;
déterminer (103) une correspondance entre les au moins deux CM et les au moins deux séparateurs/prises d'après un rapport signal/brouillage plus bruit SINR entre deux CM quelconques parmi les CM ; et
déterminer une topologie d'un réseau d'après la longueur du câble d'infrastructure, la longueur du câble d'embranchement, et la correspondance entre les au moins deux CM et les au moins deux séparateurs/prises.

2. Procédé selon la revendication 1, le réseau comportant au moins deux séparateurs/prises, et la longueur du câble d'infrastructure comportant une longueur d'un câble d'infrastructure entre un port du CMTS et un port d'un premier séparateur/d'une première prise et une longueur d'un câble d'infrastructure entre le port du CMTS et un port de chaque séparateur/prise parmi d'autres deuxièmes séparateurs/prises.

3. Procédé selon la revendication 1, la détermination d'une correspondance entre les au moins deux CM et les au moins deux séparateurs/prises d'après un rapport signal/brouillage plus bruit SINR entre deux CM quelconques parmi les CM comportant les étapes consistant à :
calculer un SINR entre les deux CM quelconques parmi les CM, pour obtenir au moins un SINR ;
grouper un CM correspondant à un SINR qui est inférieur à une première valeur préétablie en un groupe, pour obtenir au moins un groupe de CM ;
sélectionner un CM issu de chaque groupe de CM, et regrouper des éléments d'informations caractéristiques de SINR entre les CM sélectionnés, pour obtenir au moins un groupe d'informations caractéristiques de SINR ; et
déterminer la correspondance entre les au moins deux CM et les au moins deux séparateurs/prises d'après une quantité d'éléments d'informations caractéristiques comprise dans chaque groupe d'informations caractéristiques de SINR.

4. Procédé selon la revendication 3, la détermination de la correspondance entre les au moins deux CM et les au moins deux séparateurs/prises d'après une quantité d'éléments d'informations caractéristiques comprise dans chaque groupe d'informations caractéristiques de SINR comportant :
la détermination d'un même CM correspondant à des informations caractéristiques dans un i^{ème} groupe d'informations caractéristiques de SINR en tant que CM du i^{ème} ordre relié au câble d'infrastructure, une quantité d'éléments d'informations caractéristiques dans le i^{ème} groupe d'informations caractéristiques de SINR étant inférieure à une quantité d'éléments d'informations caractéristiques dans un (i-1)^{ème} groupe d'informations caractéristiques de SINR, et i étant un entier supérieur ou égal à 2.

5. Procédé selon l'une quelconque des revendications 1 à 4, la détermination d'une longueur d'un câble d'infrastructure d'après une première caractéristique en domaine temporel d'un canal d'écho d'un CMTS comportant :
la détermination de la longueur du câble d'infrastructure d'après une différence temporelle entre deux pics de la première caractéristique en domaine temporel.

6. Procédé selon l'une quelconque des revendications 1 à 5, la détermination, d'après une deuxième caractéristique en domaine temporel d'un canal d'écho de chaque modem câble CM, d'une longueur d'un câble d'embranchement relié au câble d'infrastructure comportant :
la détermination de la longueur du câble d'embranchement d'après une différence temporelle entre deux pics de la deuxième caractéristique en domaine temporel.

7. Procédé selon l'une quelconque des revendications 1 à 6, le procédé comportant en outre les étapes consistant à :
déterminer si une valeur d'intensité de la première caractéristique en domaine temporel et/ou une valeur d'intensité de la deuxième caractéristique en domaine temporel dépasse(nt) une deuxième valeur préétablie ; et
émettre des informations d'invite si la valeur d'intensité de la première caractéristique en domaine temporel et/ou la valeur d'intensité de la deuxième caractéristique en domaine temporel dépasse(nt) la deuxième valeur préétablie, les informations d'invite étant utilisées pour indiquer un degré d'écho et/ou un emplacement d'un point de réflexion d'écho du CMTS et/ou un degré d'écho et/ou un emplacement d'un point de réflexion d'écho du CM correspondant à la deuxième caractéristique en domaine temporel.

8. Appareil de détermination de topologie de réseau destiné à être utilisé dans un réseau, le réseau comportant un câble d'infrastructure, un système de terminaison de modem câble, CMTS, au moins deux séparateurs/prises, et au moins deux modems câble, CM, chaque CM étant relié à un séparateur/une prise correspondants, l'appareil comportant :
un premier module (901) de détermination, configuré pour déterminer une longueur du câble d'infrastructure d'après une première caractéristique en domaine temporel d'un canal d'écho du CMTS ;
un deuxième module (902) de détermination, configuré pour déterminer, d'après une deuxième caractéristique en domaine temporel d'un canal d'écho de chaque CM, une longueur d'un câble d'embranchement relié au câble d'infrastructure, la longueur du câble d'embranchement comportant une longueur d'un câble entre chaque CM et le câble d'infrastructure ;
un troisième module (903) de détermination, configuré pour déterminer une correspondance entre les au moins deux CM et les au moins deux séparateurs/prises d'après un rapport signal/brouillage plus bruit SINR entre deux CM quelconques parmi les CM ; et
un quatrième module (904) de détermination, configuré pour déterminer une topologie d'un réseau d'après la longueur du câble d'infrastructure, la longueur du câble d'embranchement, et la correspondance entre les au moins deux CM et les au moins deux séparateurs/prises.

9. Appareil selon la revendication 8, le réseau comportant au moins deux séparateurs/prises, et la longueur du câble d'infrastructure comportant une longueur d'un câble d'infrastructure entre un port du CMTS et un port d'un premier séparateur/d'une première prise et une longueur d'un câble d'infrastructure entre le port du CMTS et un port de chaque séparateur/prise parmi d'autres deuxièmes séparateurs/prises.

10. Appareil selon la revendication 8, le troisième module de détermination comportant :
un sous-module (9031) de calcul, configuré pour calculer un SINR entre les deux CM quelconques parmi les CM, pour obtenir au moins un SINR ;
un sous-module (9032) de regroupement, configuré pour regrouper un CM correspondant à un SINR qui est inférieur à une première valeur préétablie en un groupe, pour obtenir au moins un groupe de CM ;
le sous-module de regroupement étant en outre configuré pour sélectionner un CM issu de chaque groupe de CM, et regrouper des éléments d'informations caractéristiques de SINR entre les CM sélectionnés, pour obtenir au moins un groupe d'informations caractéristiques de SINR ; et
un sous-module (9033) de détermination, configuré pour déterminer la correspondance entre les au moins deux CM et les au moins deux séparateurs/prises d'après une quantité d'éléments d'informations caractéristiques comprise dans chaque groupe d'informations caractéristiques de SINR.

11. Appareil selon la revendication 10, le sous-module de détermination étant spécifiquement configuré pour :
déterminer un même CM correspondant à des informations caractéristiques dans un i^{ème} groupe d'informations caractéristiques de SINR en tant que CM du i^{ème} ordre relié au câble d'infrastructure, une quantité d'éléments d'informations caractéristiques dans le i^{ème} groupe d'informations caractéristiques de SINR étant inférieure à une quantité d'éléments d'informations caractéristiques dans un (i-1)^{ème} groupe d'informations caractéristiques de SINR, et i étant un entier supérieur ou égal à 2.

12. Appareil selon l'une quelconque des revendications 8 à 11, le premier module de détermination étant spécifiquement configuré pour :
déterminer la longueur du câble d'infrastructure d'après une différence temporelle entre deux pics de la première caractéristique en domaine temporel.

13. Appareil selon l'une quelconque des revendications 8 à 12, le deuxième module de détermination étant spécifiquement configuré pour :
déterminer la longueur du câble d'embranchement d'après une différence temporelle entre deux pics de la deuxième caractéristique en domaine temporel.

14. Appareil selon l'une quelconque des revendications 8 à 13, l'appareil comportant en outre :
un module (905) de jugement, configuré pour déterminer si une valeur d'intensité de la première caractéristique en domaine temporel et/ou une valeur d'intensité de la deuxième caractéristique en domaine temporel dépasse(nt) une deuxième valeur préétablie ; et
un module (906) d'émission, configuré pour émettre des informations d'invite lorsque le module de jugement détermine que la valeur d'intensité de la première caractéristique en domaine temporel et/ou la valeur d'intensité de la deuxième caractéristique en domaine temporel dépasse(nt) la deuxième valeur préétablie, les informations d'invite étant utilisées pour indiquer un degré d'écho et/ou un emplacement d'un point de réflexion d'écho du CMTS et/ou un degré d'écho et/ou un emplacement d'un point de réflexion d'écho du CM correspondant à la deuxième caractéristique en domaine temporel.

15. Système de détermination de topologie de réseau, comportant l'appareil selon l'une quelconque des revendications 8 à 14.
